# EUROPEAN PATENT APPLICATION

(11) **EP 4 075 455 A1**
(43) Date of publication of application: **19.10.2022**
(21) Application number: 20900198.1
(22) Date of filing: 07.12.2020
(51) Int. Cl.: H01B 17/56, C08J 5/18, H01G 17/00, H01G 4/32, H01G 4/38, H02M 7/48

(54) **DIELECTRIC FILM, FILM CAPACITOR USING SAME, INTERLINKED CAPACITOR, INVERTER, AND ELECTRIC VEHICLE**

(30) Priority: 13.12.2019 JP 2019225721
(71) Applicant: Kyocera Corporation, Kyoto-shi Kyoto 612-8501 (JP)
(72) Inventor: YAMAZAKI, Youichi, Kyoto-shi, Kyoto 612-8501 (JP)
(74) Representative: Viering, Jentschura & Partner mbB Patent- und Rechtsanwälte
(86) International application number: PCT/JP2020/045464
(87) International publication number: WO 2021/117674

(57) **Abstract**

A dielectric film includes a substrate being a film including a resin material, and a plurality of microscopic members on a first surface of the substrate. Each of the plurality of microscopic members includes a first portion spaced from the first surface, and a second portion extending from the first surface and supporting the first portion.

## Description

### FIELD

The present disclosure relates to a dielectric film, a film capacitor and a connected capacitor each including the dielectric film, an inverter, and an electric vehicle.

### BACKGROUND

A known technique is described in, for example, Patent Literature 1.

### CITATION LIST

### PATENT LITERATURE

Patent Literature 1: Japanese Unexamined Patent Application Publication No. 2015-201527

### BRIEF SUMMARY

A dielectric film according to an aspect of the present disclosure includes a substrate being a film including a resin material, and a plurality of microscopic members on a first surface of the substrate. Each of the plurality of microscopic members includes a first portion spaced from the first surface, and a second portion extending from the first surface and supporting the first portion.

A film capacitor according to another aspect of the present disclosure includes a body including at least one metalized film including a metal film on the above dielectric film and wound or stacked, and an external electrode on the body.

A connected capacitor according to another aspect of the present disclosure includes a plurality of the above film capacitors connected by a busbar.

An inverter according to another aspect of the present disclosure includes a bridge circuit including a switching element, and a capacitance portion connected to the bridge circuit and including the above film capacitor.

An electric vehicle according to another aspect of the present disclosure includes a power supply, the above inverter connected to the power supply, a motor connected to the inverter, and a wheel drivable by the motor.

### BRIEF DESCRIPTION OF DRAWINGS

The objects, features, and advantages of the present disclosure will be more apparent from the detailed description and the drawings below.
FIG. 1A is a schematic diagram of a dielectric film.
FIG. 1B is a schematic diagram of a dielectric film.
FIG. 1C is a schematic diagram of a dielectric film.
FIG. 1D is a schematic diagram of a dielectric film.
FIG. 1E is a schematic diagram of a dielectric film.
FIG. 2A is a schematic cross-sectional view of a structure including a dielectric film and a metal film on a surface of the dielectric film.
FIG. 2B is an external perspective view of a film capacitor according to a first embodiment.
FIG. 3 is a schematic development perspective view of a film capacitor according to a second embodiment.
FIG. 4 is a schematic perspective view of a connected capacitor according to one embodiment.
FIG. 5 is a schematic diagram of an inverter according to one embodiment.
FIG. 6 is a schematic diagram of an electric vehicle according to one embodiment.

### DETAILED DESCRIPTION

A film capacitor with the structure that forms the basis of a film capacitor according to the present disclosure includes either wound metalized films or metalized films stacked in one direction. The metalized films are formed by vapor deposition of metal to form an electrode on a surface of a dielectric film of, for example, a polypropylene resin.

The film capacitor is self-healing. In other words, when a short circuit forms in an insulation defective portion of its metalized film, energy of the short circuit causes the metal film around the defective portion to evaporate, diffuse, and break, thus insulating the defective portion and preventing dielectric breakdown in the film capacitor.

Outgassing facilitates self-healing of the film capacitor when the metal film around the defective portion evaporates and diffuses. In particular, outgassing is less likely to occur around an insulation margin at which adj acent metalized films adhere to each other. A method is known for roughening the surface of such metalized films at the insulation margin for outgassing (refer to Patent Literature 1).

The surface of a metalized film can be roughened by physically processing (e.g., blasting) or chemically treating (e.g., etching) the film surface or by mixing a particulate lubricant or another agent in the raw material and forming the film. However, simply increasing the surface roughness to reduce adhesion between films cannot achieve sufficient outgassing, but may cause, for example, breaks in the films.

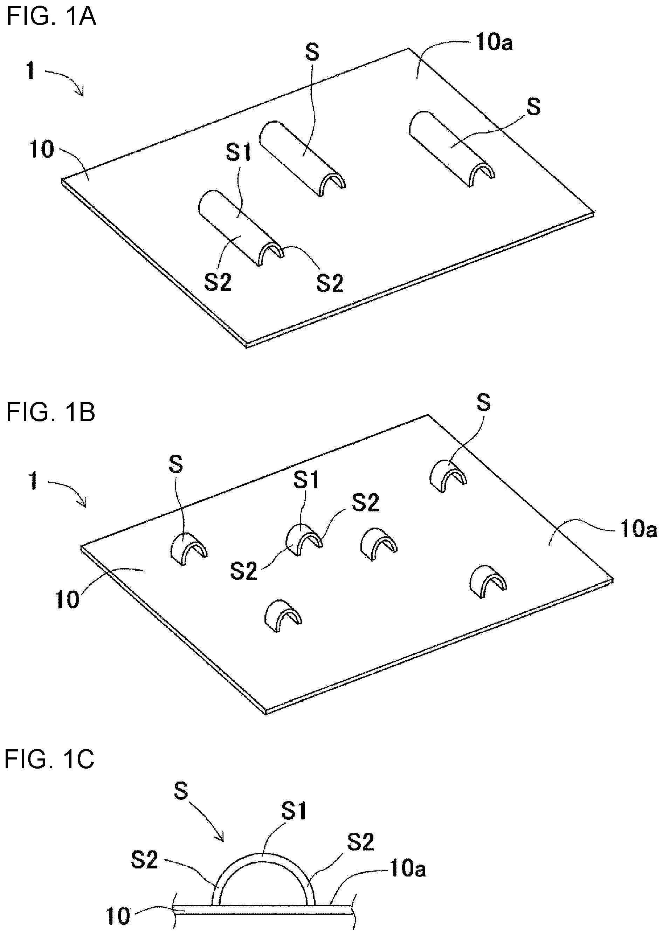

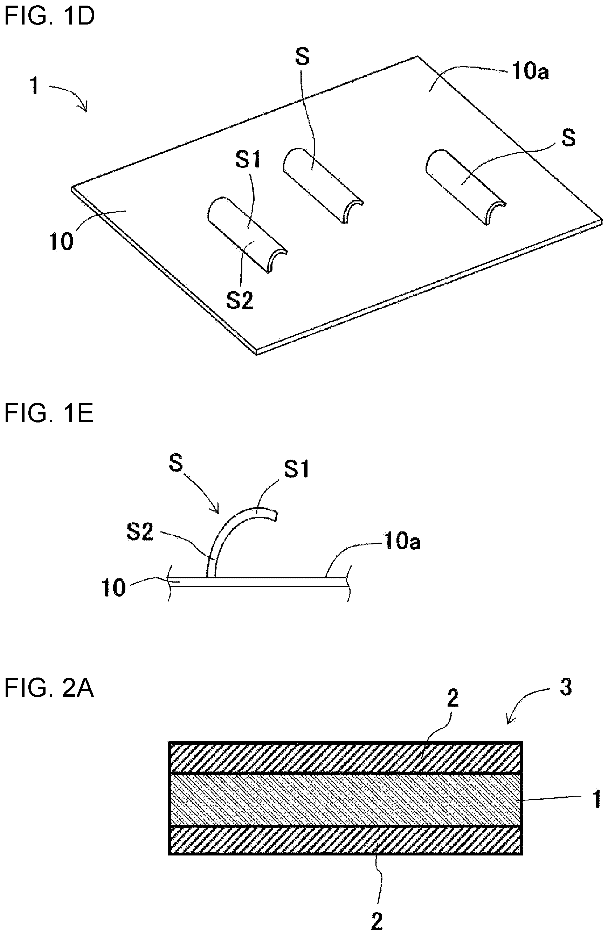

FIGs. 1A to 1E are schematic diagrams of dielectric films. The figures are enlarged to show microscopic members easily. The dielectric film 1 in the present embodiment includes a substrate 10 as a film formed from a resin material and multiple microscopic members S on a first surface 10a of the substrate 10. Each microscopic member S includes two portions, or a first portion S1 and second portions S2.

The substrate 10 is a thin film formed from an insulating resin material. Examples of the insulating resin material include polypropylene (PP), polyethylene terephthalate (PET), polyphenylene sulfide (PPS), polyethylene naphthalate (PEN), polyarylate (PAR), polyphenylene ether (PPE), polyetherimide (PEI), and cycloolefin polymers (COPs). The insulating resin material may specifically be PAR having a high dielectric breakdown voltage.

The dielectric film 1 in the present embodiment is a metalized film for the film capacitor with the dimensions including width, length, and thickness that are set as appropriate for the characteristics of the film capacitor.

The substrate 10 includes, on its first surface 10a, the multiple microscopic members S. The first portion S1 of each microscopic member S is spaced from the first surface 10a, with a space between the first portion S1 and the first surface 10a. The second portions S2 of each microscopic member S rise from the first surface 10a and support the first portion S1. The second portions S2 may simply support the first portion S1 to maintain the space between the first portion S1 and the first surface 10a.

In the metalized film for the film capacitor, a short circuit can form around a defective insulation portion. However, the short-circuited portion has high resistance and generates heat, causing the short-circuited portion of the metal film to evaporate, diffuse, and break. The break in the metal film insulates the short-circuited portion, thus allowing self-healing of the film capacitor. However, the gas is generated when the short-circuited portion of the metal film evaporates and diffuses. This may cause the stacked metalized films to separate. The metalized film may then have breaks due to further gas expansion. Such breaks can be reduced by increasing outgassing.

The microscopic members S provide an appropriate surface roughness with microscopic irregularities on the surface of the dielectric film 1. The microscopic members S reduce adhesion to another stacked dielectric film and allow improved outgassing during the self-healing of the film capacitor. In addition, the microscopic members S control part of the generated gas flow. Although the gas generated during the self-healing flows in a disordered or isotropic manner, this does not provide sufficient outgassing. Part of the gas flows through the space defined by the first portion S1 and the second portions S2 of each microscopic member S. In other words, the microscopic members S with the above structure guide the gas flow in a predetermined direction.

At least one of the first portion S1 or the second portions S2 of each microscopic member S extends in a direction parallel to the first surface 10a. The direction of extension is defined as a predetermined direction. Part of the gas flow can thus be guided in an intended direction.

The dielectric film 1 in the present embodiment includes the microscopic members S to have an appropriate surface roughness and to control the gas flow, improving outgassing and self-healing.

Each microscopic member S is shaped like a tunnel as shown in the perspective view of FIG. 1A and in the front view of FIG. 1C. Each microscopic member S shaped like a tunnel includes the first portion S1 as the ceiling extending in the direction parallel to the first surface 10a, and the second portions S2 as side walls that support the two ends of the first portion S1 on both side in the width direction. As shown in FIG. 1A, each microscopic member S in the present embodiment is shaped like a semi-cylindrical tunnel. The first portion S1 and the second portions S2 may have a boundary that is not clear unlike the semi-cylindrical shape in the present embodiment. The first portion S1 may simply include a portion that is spaced from the first surface 10a. The second portions S2 may simply include portions connecting the first surface 10a and the first portion S1 and maintaining the space.

Each microscopic member S with the tunnel shape as in the present embodiment may have, for example, a height H of 0.05 to 10 µm inclusive, a width W of 0.1 to 20 µm inclusive, and a length L of 0.1 to 200 µm inclusive. The number density of the microscopic members S may be, for example, 1 to 300 microscopic members/mm² inclusive. The dimensions and the number density of the microscopic members S can be measured with known methods such as electron microscopic observation of the surface and the cross-section of the dielectric film 1.

Part of the gas generated during the self-healing flows into the inner space through one opening of each tunnel-shaped microscopic member S, and flows through the microscopic member S, and out of the microscopic member S through the other opening. Each tunnel-shaped microscopic member S guides the generated gas flow along the length to improve outgassing. Each microscopic member S has the length L of at least 10 µm and the number density of at least 20 microscopic members/mm² to facilitate gas flow in a predetermined direction. For the dielectric film 1 used in a film capacitor with a wound structure, the gas flow in the extending direction of the microscopic member S allows the microscopic member S to extend along the width parallel to the winding axis to further improve outgassing. For the dielectric film 1 used in a film capacitor with a stacked structure, each microscopic member S may extend toward the side edge closest to the microscopic members S, or toward the longer edge of a rectangle of the film capacitor in a plan view, to further improve outgassing.

The multiple tunnel-shaped microscopic members S on the surface of the dielectric film 1 each may have the same size. The height H, the width W, and the length L may differ between the microscopic members S within the above specified ranges. The multiple tunnel-shaped microscopic members S may extend straight, curved, or may be partly straight and partly curved, as shown in FIG. 1A. The multiple tunnel-shaped microscopic members S may or may not be orientated in the same direction. The multiple tunnel-shaped microscopic members S each may have the orientations of the openings at the two ends within their respective predetermined ranges.

When half or more of the microscopic members S are oriented with the openings at the two ends within the predetermined ranges, the gas generated during the self-healing may flow and improve outgassing as described above. The predefined ranges are within the range of -15 to +15° for the orientation of the opening at one end and within the range of -165 to 195° for the orientation of the opening at the other end both with respect to a predetermined direction in the dielectric film 1 in a plan view. The orientation of the opening is defined, for example, as being orthogonal to an imaginary plane containing the opening and being oriented outward. When the orientations of the openings at the two ends are within these ranges, each microscopic member S may extend straight or curved between the openings at the two ends as described above. The reference direction in the dielectric film 1 is the width direction of the dielectric film 1 when the dielectric film 1 is used for the film capacitor with the wound structure, and is the direction parallel to the short sides of the dielectric film 1 when the dielectric film 1 is used for the film capacitor with the stacked structure.

Microscopic members S in another embodiment will now be described. Each microscopic member S in the other embodiment is, for example, an arch-shaped microscopic member S, as shown in the perspective view in FIG. 1B. The front view in the present embodiment is the same as FIG. 1C. Similarly to the tunnel-shaped structure, each arch-shaped microscopic member S includes a first portion S1 and second portions S2 supporting the two ends of the first portion S1 in the width direction. The tunnel-shaped microscopic members and the arch-shaped microscopic members have different lengths. Each arch-shaped microscopic member has the ratio of the length L to the height H of 1 or less (L/H ≤ 1). Each tunnel-shaped microscopic member has the ratio of the length L to the height H greater than 1 (L/H > 1). The arch-shaped microscopic members S have the same effects as the tunnel-shaped microscopic members.

The arch-shaped microscopic members S in the present embodiment may have, for example, the height H of 0.05 to 10 µm inclusive, the width W of 0.1 to 20 µm inclusive, and the length L of 0.01 to 10 µm inclusive. The number density of the microscopic members S may be, for example, 10 to 3000 microscopic members/mm² inclusive.

In another embodiment, microscopic members S each may have a first portion S1 with one end being supported by a second portion S2 and the opposite other end being a free end of the microscopic member S. Such microscopic members S are hood-shaped, as shown in the perspective view in FIG. 1D and in the front view in FIG. IE. In each hood-shaped microscopic member S, the first portion S1 is a roof extending in the direction parallel to the first surface 10a, and the second portion S2 as a wall supporting one end of the first portion S1, and the other end of the first portion S1 being a free end of the hood.

The tunnel-shaped and arch-shaped microscopic members S can each guide, in the length direction, the gas flow entering through the openings. In other words, these microscopic members S cannot guide any gas flow that does not enter through the opening. The hood-shaped microscopic members S in the present embodiment each have the first portion S1 that is widely open at the edge of the hood. The gas flowing through the edge of the hood hits the second portion S2 and flows along the second portion S2, thus allowing a relatively large amount of gas flow to be guided. Thus, the hood-shaped microscopic members S in the present embodiment can control the gas flow and thus improve the gas flow to improve outgassing, thus improving self-healing.

In each hood-shaped microscopic member S, part of the gas flow hitting the second portion S2 may return to the open edge of each hood. In other words, the tunnel-shaped and arch-shaped microscopic members S have relatively less flow of gas to be controlled, but have higher reliability of control. The hood-shaped microscopic members S may have a relatively lower reliability of control but can control a relatively larger amount of gas flow. Depending on the type, the size, and the characteristics of the film capacitor including the dielectric film 1, whether to use the tunnel-shaped microscopic members S and the arch-shaped microscopic members S or the hood-shaped microscopic members S, or a combination of these may be determined as appropriate.

Each hood-shaped microscopic member S in the present embodiment may have, for example, the height H of 0.1 to 20 µm inclusive, the width W of 0.05 to 10 µm inclusive, and the length L of 0.1 to 200 µm inclusive. The distance D between the free end of the first portion S1 and the first surface 10a may be 0.05 to 15 µm inclusive. The number density of the microscopic members S may be, for example, 1 to 300 microscopic members/mm² inclusive.

The multiple hood-shaped microscopic members S on the surface of the dielectric film 1 may have the same size. The height H, the width W, and the length L may differ between the microscopic members S within the above specified ranges. The multiple hood-shaped microscopic members S may extend straight or curved, or may be partly straight and partly curved as shown in FIG. 1B. The multiple hood-shaped microscopic members S may or may not be orientated in the same direction.

A method for manufacturing the dielectric film 1 including the microscopic members S will now be described. A resin solution is obtained first by dissolving an insulating resin material selected from the above examples in a solvent. Examples of the solvent include methanol, isopropanol, n-butanol, ethylene glycol, ethylene glycol monopropyl ether, methyl ethyl ketone, methyl isobutyl ketone, xylene, propylene glycol monomethyl ether, a propylene glycol monomethyl ether acetate, dimethylacetamide, cyclohexane, and an organic solvent containing a mixture of two or more solvents selected from the above solvents.

The resulting resin solution is coated on the surface of a mold sheet of PET, for example. The mold sheet is dried to volatilize the solvent. The mold sheet has grooves or holes at positions corresponding to the microscopic members S. This allows any film surface separated from the mold sheet to have plate portions transferred from the grooves or rod portions transferred from the holes onto the film surface as extending portions. Each plate portion or rod portion is bent by, for example, rubbing the film surface. After the plate portion or rod portion is bent, the opposite end of the extending portion is bonded onto the film surface to form the tunnel-shaped or arch-shaped microscopic member S. The end may be bonded to the film surface either by heating or by using an adhesive. The rubbing may be performed with a smaller force to bend the opposite end of the plate portion or the rod portion without coming in contact with the film surface to form the hood-shaped microscopic member S.

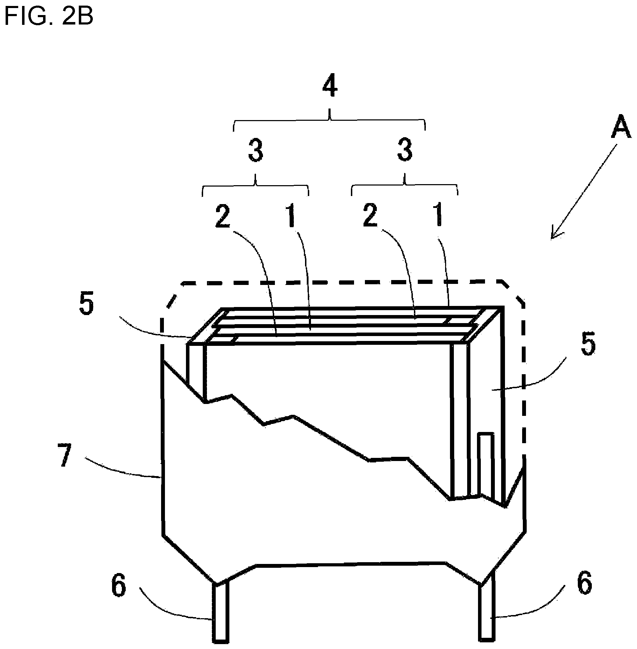

FIG. 2A is a schematic cross-sectional view of a structure including a dielectric film and a metal film on a surface of the dielectric film. FIG. 2B is an external perspective view of a film capacitor according to the first embodiment. A film capacitor A according to the first embodiment shown in FIG. 2B has the basic structure including a body 4 including metalized films 3 each including a dielectric film 1 and a metal film 2 on one surface of the dielectric film 1, and an external electrode 5. The film capacitor A may include lead wires 6 as appropriate.

In this case, the body 4, the external electrode 5, and parts of the lead wires 6 may be covered with an enclosure 7 as appropriate for insulation and environmental resistance. In FIG. 2B, the enclosure 7 is partially removed, with the removed portion indicated by a dashed line.

The dielectric film 1 in the present embodiment may be used not only for the film capacitor with the stacked structure shown in FIGs. 2A and 2B, but also for the film capacitor B with the wound structure.

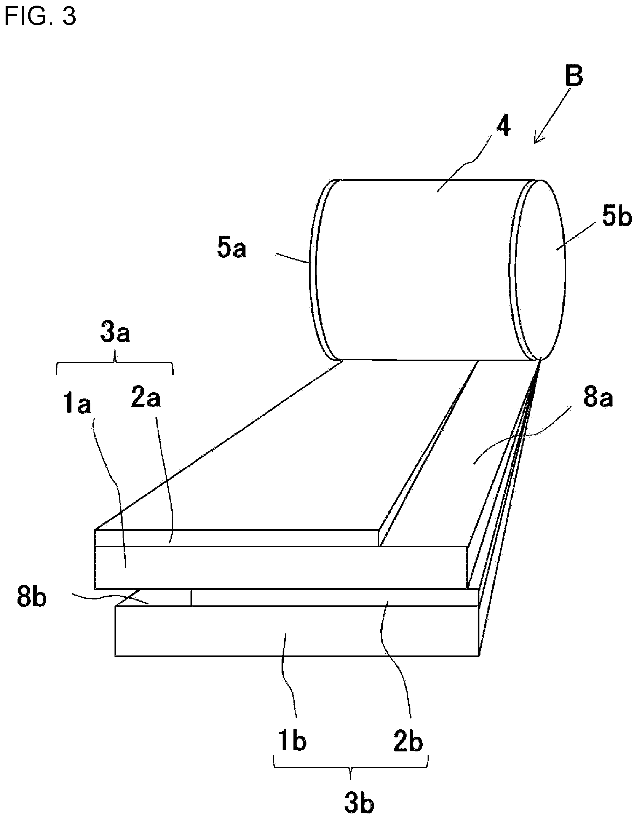

FIG. 3 is a schematic development perspective view of a film capacitor according to a second embodiment. A film capacitor B in the present embodiment includes a body 4 including wound metalized films 3a and 3b. The film capacitor B further includes metalsprayed electrodes as external electrodes 5a and 5b on the opposite end faces of the body 4.

The metalized film 3a includes a dielectric film 1a and a metal film 2a on the surface of the dielectric film 1a. The metalized film 3b includes a dielectric film 1b and a metal film 2b on the surface of the dielectric film 1b. In FIG. 3, the metal film 2a or 2b is not located on one end portion of the dielectric film 1a or 1b for a film capacitor in the width direction of the dielectric film to allow a portion (hereafter referred to as a metal film-free portion 8a or 8b) of the dielectric film 1a or 1b for a film capacitor to remain exposed continuously in the longitudinal direction.

The metalized films 3a and 3b include the metal film-free portions 8a and 8b at different ends from each other in the width direction of the dielectric films 1a and 1b. The metalized films 3a and 3b are stacked with the other ends of the metal film-free portions 8a and 8b displaced from each other and protrude in the width direction.

In other words, the film capacitor B includes the metalized film 3a including the dielectric film 1a and the metal film 2a, and the metalized film 3b including the dielectric film 1b and the metal film 2b that are stacked and wound as shown in FIG. 3. In FIG. 3, the dielectric films 1a and 1b and the metal films 2a and 2b are thicker from the rear toward the front of FIG. 3 for easy understanding of the structure of the film capacitor B, but actually have constant thicknesses.

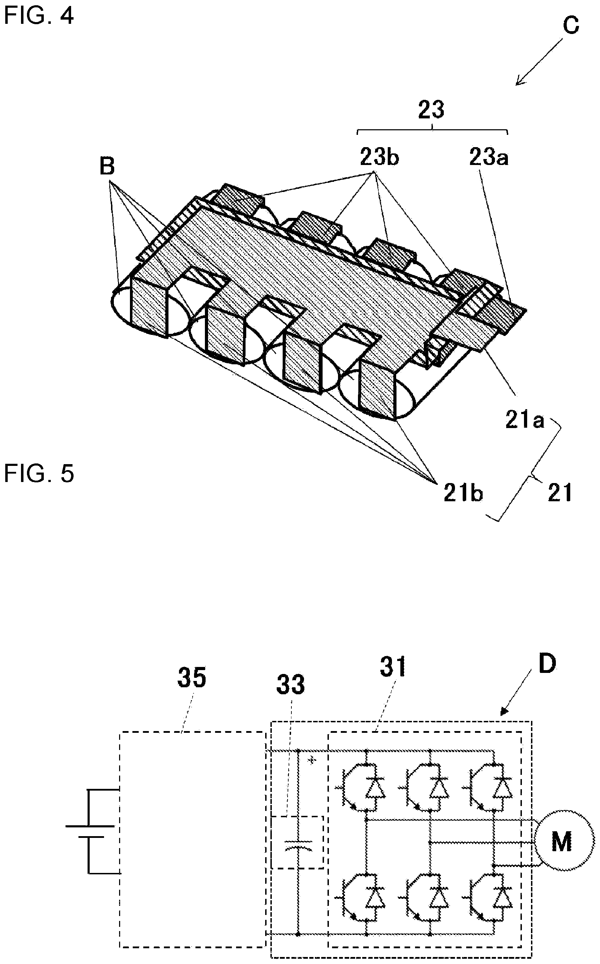

FIG. 4 is a schematic perspective view of a connected capacitor according to one embodiment. FIG. 4 does not show a case and a resin for molding for easy understanding of the structure. A connected capacitor C according to the present embodiment includes multiple film capacitors B connected parallel to each other with a pair of busbars 21 and 23. The busbars 21 and 23 include terminals 21a and 23a and output terminals 21b and 23b. The terminals 21a and 23a are used for external connection. The output terminals 21b and 23b are connected respectively to the external electrodes 5a and 5b in the film capacitor B. The film capacitor A may be used in place of the film capacitor B for the connected capacitor C.

The dielectric film 1 in the present embodiment usable as a dielectric film for the film capacitor A or B or the connected capacitor C can be thinner than a conventional dielectric film formed from, for example, PP or PET. The film capacitors A and B and the connected capacitor C can thus have a smaller size and higher capacitance.

When an organic resin such as PAR, PPE, cyclic olefin, or PEI is used as a main component of the dielectric film 1, the resultant film capacitors A and B and the connected capacitor C have high heat resistance. The resultant capacitor products are thus less likely to lower capacitance and insulation resistance at high temperatures (e.g., in the atmosphere with a temperature of 80 °C or higher). In addition to the planar arrangement shown in FIG. 4, the same effects as the connected capacitor C can be produced when the flat surfaces of the film capacitor B are stacked on each other.

FIG. 5 is a schematic diagram of an inverter according to one embodiment. FIG. 5 shows an example of an inverter D that converts rectified direct current to alternating current. As shown in FIG. 5, the inverter D includes a bridge circuit 31 and a capacitance portion 33. The bridge circuit 31 includes a switching element such as an insulated-gate bipolar transistor (IGBT) and a diode. The capacitance portion 33 is located between the input terminals of the bridge circuit 31 to stabilize the voltage. The inverter D includes the above film capacitor A or B or the connected capacitor C as the capacitance portion 33.

The inverter D is connected to a booster circuit 35 that raises the voltage of the DC power supply. The bridge circuit 31 is connected to a motor generator (motor M) as a drive source.

When the film capacitor A or B or the connected capacitor C according to the present embodiment is used as the capacitance portion 33 of the inverter D, the volume of the capacitance portion 33 in the inverter D can be reduced. The resultant inverter D includes the capacitance portion 33 with a smaller size and higher capacitance. The inverter D can have small fluctuations in its modulation wave at high temperatures.

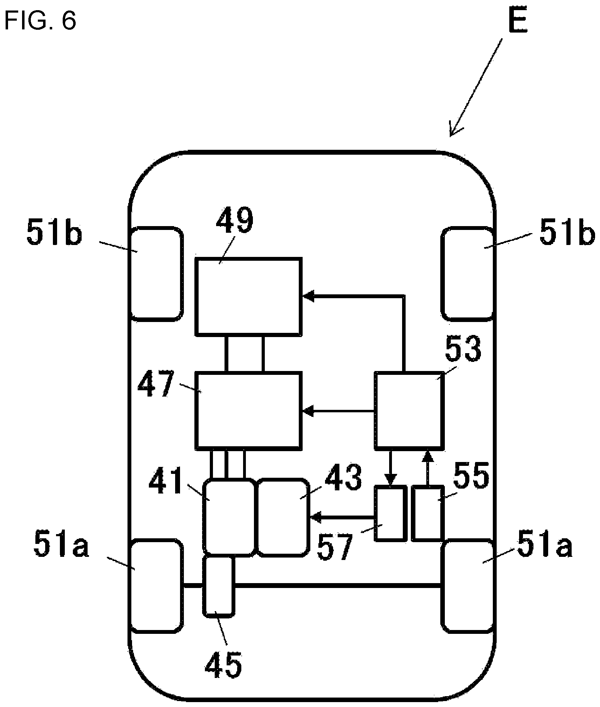

FIG. 6 is a schematic diagram of an electric vehicle according to one embodiment. FIG. 6 shows a hybrid electric vehicle (HEV) as an example of an electric vehicle E.

The electric vehicle E in FIG. 6 includes a drive motor 41, an engine 43, a transmission 45, an inverter 47, a power supply (battery) 49, front wheels 51a, and rear wheels 51b.

The electric vehicle E includes, as a drive source, the motor 41 or the engine 43, or both. An output from the drive source is transmitted to the pair of left and right front wheels 51a through the transmission 45. The power supply 49 is connected to the inverter 47, which is connected to the motor 41.

The electric vehicle E shown in FIG. 6 also includes a vehicle electronic control unit (ECU) 53 and an engine ECU 57. The vehicle ECU 53 centrally controls the entire electric vehicle E. The engine ECU 57 controls the rotation speed of the engine 43 and drives the electric vehicle E. The electric vehicle E further includes an ignition key 55 operable by, for example, a driver, and driving components such as an accelerator pedal and a brake (not shown). The vehicle ECU receives an input of a drive signal in response to an operation on a driving component performed by, for example, the driver. The vehicle ECU 53 outputs, based on the drive signal, an instruction signal to the engine ECU 57, the power supply 49, and the inverter 47 as a load. In response to the instruction signal, the engine ECU 57 controls the rotation speed of the engine 43 and drives the electric vehicle E.

When the film capacitor A or B or the connected capacitor C according to the present embodiment is used as the capacitance portion 33 and the miniaturized inverter D is mounted on, for example, the electric vehicle E shown in FIG. 6, the vehicle can have a lower weight than when a large inverter including a film capacitor or a connected capacitor including a known dielectric film formed from, for example, PP or PET. The structure according to the present embodiments can reduce the weight of the vehicle and increase fuel efficiency. In this structure, the control equipment for the vehicle uses less space in the engine compartment. With the control equipment using less space, the engine compartment can contain parts for improving impact resistance, thus further improving vehicle safety.

The inverter D according to the present embodiment is also usable in various products including power converters such as an electric vehicle (EV), an electric bicycle, a power generator, and a solar cell, in addition to the HEV described above.

The present disclosure may be implemented in the following forms.

A dielectric film according to one or more embodiments of the present disclosure includes a substrate being a film including a resin material, and a plurality of microscopic members on a first surface of the substrate. Each of the plurality of microscopic members includes a first portion spaced from the first surface, and a second portion extending from the first surface and supporting the first portion.

A film capacitor according to one or more embodiments of the present disclosure includes a body including at least one metalized film including a metal film on the above dielectric film and wound or stacked, and an external electrode on the body.

A connected capacitor according to one or more embodiments of the present disclosure includes a plurality of the above film capacitors connected by a busbar.

An inverter according to one or more embodiments of the present disclosure includes a bridge circuit including a switching element, and a capacitance portion connected to the bridge circuit and including the above film capacitor.

An electric vehicle according to one or more embodiments of the present disclosure includes a power supply, the above inverter connected to the power supply, a motor connected to the inverter, and a wheel drivable by the motor.

The embodiments of the present disclosure provide the dielectric film with improved self-healing, the film capacitor and the connected capacitor each including the dielectric film, the inverter, and the electric vehicle.

Although the embodiments of the present disclosure have been described in detail, the present disclosure is not limited to the above embodiments, and may be modified or changed variously without departing from the spirit and scope of the present disclosure. The components described in the above embodiments may be entirely or partially combined as appropriate unless any contradiction arises.

### Reference Signs List

A, B film capacitor
C connected capacitor
D, 47 inverter
E electric vehicle
1, 1a, 1b dielectric film
2, 2a, 2b metal film
3, 3a, 3b metalized film
4 body
5, 5a, 5b external electrode
6 lead wire
7 enclosure
8a, 8b metal film-free portion
10 substrate
10a first surface
21, 23 busbar
31 bridge circuit
33 capacitance portion
35 booster circuit
41 motor
43 engine
45 transmission
47 inverter
49 power supply
51a front wheel
51b rear wheel
53 vehicle electronic control unit (ECU)
55 ignition key
57 engine ECU
S microscopic member
S1 first portion
S2 second portion

## Claims

1. A dielectric film, comprising:
a substrate being a film comprising a resin material; and
a plurality of microscopic members on a first surface of the substrate,
wherein each of the plurality of microscopic members includes a first portion spaced from the first surface, and a second portion extending from the first surface and supporting the first portion.

2. The dielectric film according to claim 1, wherein
the first portion has one end supported by the second portion and another end being a free end.

3. The dielectric film according to claim 1, wherein
the first portion has two ends each supported by the second portion.

4. The dielectric film according to any one of claims 1 to 3, wherein
the second portion comprises the resin material.

5. The dielectric film according to any one of claims 1 to 4, wherein
the first portion comprises the resin material.

6. The dielectric film according to any one of claims 1 to 5, wherein
the plurality of microscopic members include arch-shaped members or tunnel-shaped members.

7. The dielectric film according to any one of claims 1 to 6, wherein
each of the plurality of microscopic members has a height of 0.05 to 20 µm inclusive.

8. The dielectric film according to claim 2, wherein
the first surface and the free end are at a distance of 0.05 to 20 µm inclusive.

9. The dielectric film according to any one of claims 1 to 8, wherein
the plurality of microscopic members have a number density of 1 to 3000 microscopic members/mm² inclusive.

10. The dielectric film according to any one of claims 1 to 9, wherein
the dielectric film is included in a wound film capacitor, and at least a half of the plurality of microscopic members each have an opening at one end being orientated at an angle of -15 to +15° with respect to a width direction of the wound film capacitor and an opening at another end being oriented at an angle of 165 to 195° with respect to the width direction.

11. The dielectric film according to any one of claims 1 to 9, wherein
the dielectric film is included in a rectangular stacked film capacitor, and at least a half of the plurality of microscopic members each have an opening at one end being orientated at an angle of -15 to +15° with respect to a direction parallel to a short side of the rectangular stacked film capacitor and an opening at another end being oriented at an angle of 165 to 195° with respect to the direction parallel to the short side of the rectangular stacked film capacitor.

12. A film capacitor, comprising:
a body including at least one metalized film including a metal film on the dielectric film according to any one of claims 1 to 11, the at least one metalized film being wound or stacked; and
an external electrode on the body.

13. A connected capacitor, comprising:
a plurality of the film capacitors according to claim 12, the plurality of film capacitors being connected by a busbar.

14. An inverter, comprising:
a bridge circuit including a switching element; and
a capacitance portion connected to the bridge circuit, the capacitance portion including the film capacitor according to claim 12.

15. An electric vehicle, comprising:
a power supply;
the inverter according to claim 14 connected to the power supply;
a motor connected to the inverter; and
a wheel drivable by the motor.
